# EUROPÄISCHE PATENTSCHRIFT

(11) **EP 0 371 531 B1**
(45) Veröffentlichungstag und Bekanntmachung des Hinweises auf die Patenterteilung: **28.04.1993**
(21) Anmeldenummer: 89202810.1
(22) Anmeldetag: 08.11.1989
(51) Int. Cl.: B01D 46/30, B01D 50/00, B01D 45/12

(54) **Schüttschichtfilter mit Zentrifugalabscheider**
Filter bed combined with a centrifugal separator
Couche filtrante avec séparateur centrifuge

(30) Priorität: 01.12.1988 DE 3840510
(43) Veröffentlichungstag der Anmeldung: 06.06.1990
(73) Patentinhaber: METALLGESELLSCHAFT Aktiengesellschaft, 60015 Frankfurt (DE)
(72) Erfinder: Leussler, Wilhelm, D-6230 Frankfurt 80 (DE); Würl, Robert, D-6369 Schöneck (DE); Schlaffer, Herbert, D-6092 Kelsterbach (DE)

(56) Entgegenhaltungen:
- DE-A- 1 607 671
- FR-A- 2 301 285
- US-A- 4 695 299

## Beschreibung

Die Erfindung bezieht sich auf eine Einrichtung zum Abscheiden von Feststoffpartikeln aus einem Gasstrom, bestehend aus einem Fliehkraftabscheider und einem Schüttschichtfilter, die als bauliche Einheit in einem gemeinsamen zylindrischen Gehäuse übereinander angeordnet sind, wobei der unten angeordnete Fliehkraftabscheider ein Gehäuseteil mit einer Höhe H und einem tangentialen Gaseinlaßstutzen, einen sich an das Gehäuseteil unten anschließenden Staubsammelbunker mit Auslaß und ein die Decke durchsetzendes, zentral angeordnetes Gasauslaßrohr aufweist und wobei das von oben nach unten durchströmte Schüttschichtfilter über einem Rost einen um das Gasauslaßrohr angeordneten, kreisringförmigen Schüttraum, im Gehäuseteil zwischen Rost und Decke einen Gasaustrittsstutzen und einen Deckel aufweist (DE-A-1607671).

Bei derartigen Einrichtungen müssen die Filterschichten periodisch von darin abgesetztem Staub befreit werden, was im allgemeinen durch Rückspülen mit einem Spülgasstrom geschieht, während die Einheit für den normalen Gasdurchgang gesperrt ist. Dauer und Häufigkeit der Spülphasen richten sich nach den jeweiligen Erfodernissen, wobei man entweder feste Zeitabstände programmieren oder Meßwerte zur Auslösung der Spülphasen heranziehen kann. Für solche Fälle, bei denen das Rohgas hinsichtlich Menge, Temperatur und Staubbeladung keinen nennenswerten Schwankungen unterliegt, wird man ein einfaches Zeitschaltwerk benutzen, während man bei stark wechselnden Bedingungen auf differenziertere Steuereinrichtungen zurückgreifen muß. Dabei eignet sich eine Orientierung am Reingasstaubgehalt nur bedingt, weil die Messungen relativ aufwendig und darauf aufgebaute Regelkreise meist zu träge sind. Üblich ist daher die Messung des Druckabfalls an den einzelnen Filterschichten, der mit der Staubbeladung stetig ansteigt und der bei Überschreiten eines vorgegebenen Wertes einfach und direkt als Steuerimpuls für die Einleitung der automatisierten Spülphase benutzt werden kann.

Es hat sich jedoch herausgestellt, daß auf diese Weise bei Schüttschichtfiltern mit vorgeschaltetem Zentrifugalabscheider keine befriedigenden Ergebnisse zu erzielen sind, weil die Filterschüttung oft eine sehr ungleichmäßig verteilte Staubbeladung aufweist. Mit anderen Worten, Teile der Filterschüttung werden nur unterdurchschnittlich genutzt, während andere Teile zwischen zwei Spülphasen mit Staub überlastet werden. Das führt einerseits zu Fehlmessungen und andererseits dazu, daß man verhältnismäßig lange Spülzeiten vorsehen muß, wenn auch die mit Staub überlasteten Bereiche so vollständig abgereinigt werden sollen, wie das mit dem jeweiligen Rückspülsystem bei gleichmäßiger Staubbelastung möglich ist. Bei längeren Spülzeiten wird das Verhältnis Betriebszeit zu Spülzeit ungünstiger und es stehen - bei der üblichen Anwendung einer Merhzahl von Einrichtungengleichzeitig entsprechend weniger Einheiten für die Staubabscheidung zur Verfügung. Daraus folgt, daß für einen gegebenen Anwendungszweck von vornherein mehr Einheiten vorgesehen werden müssen.

Eine ungleichmäßige Beaufschlagung der Filterschichten wirkt sich also nicht nur auf die Meßgenauigkeit, sondern nachteilig auch auf die Betriebskosten (mehr Spülluft) und die Anlagekosten (mehr Einheiten) aus.

Es besteht daher die Aufgabe, bei Einrichtungen der eingangs genannten Art für eine gleichmäßigere Beaufschlagung der Filterschichten zu sorgen, so daß die Gasentstaubung mit derartigen Einrichtungen wirtschaftlicher durchgeführt werden kann.

Zur Lösung dieser Aufgabe wird vorgeschlagen, daß der Gaseinlaßstutzen einen rechteckigen Querschnitt aufweist, dessen Höhe 60 bis 80 %, und dessen Breite 20 bis 30 % der Höhe H des zylindrischen Gehäuseteils beträgt und daß im zentral angeordneten Gasauslaßrohr parallel zur Rohrachse verlaufende Gasleiteinrichtungen vorgesehen sind.

Anhand umfangreicher Untersuchungen war festgestellt worden, daß die ungleichmäßige Staubbeladung der Filterschichten daher rührt, daß einerseits der Gasstrom oft nicht gleichmäßig über die gesamte Anströmfläche der Filterschicht verteilt ist und daß der Gasstrom andererseits staubarme und staubreiche Strähnen aufweist. Beide Phänomene beruhen darauf, daß den optimal nur bei möglichst gleichmäßigen Strömungsverhältnissen arbeitenden Schüttschichtfiltern Zentrifugalabscheider vorgeschaltet sind, bei denen für eine gute Abscheideleistung umgekehrt möglichst unterschiedliche Strömungsverhältnisse erzeugt werden müssen. Wenn dann noch gefordert wird, daß beide Abscheider baulich möglichst raumsparend angeordnet werden sollten, wirken sich die im Zentrifugalabscheider erzeugten Störungen und Verteilungsunterschiede im Schüttschichtfilter sehr stark aus, weil dazwischen nicht genügend Gasströmungsweg für eine selbsttätige Vergleichmäßigung vorhanden ist.

Erfindungsgemäß wird diese Vergleichmäßigung im wesentlichen durch die im Gasaustrittsrohr vorgesehenen, parallel zur Rohrachse verlaufenden Gasleiteinrichtungen erreicht. Aber auch die Gestaltung des Gaseinlaßstutzens bewirkt eine deutliche Verbesserung der Abscheideleistung, weil der ankommende Gasstrom viel besser als bei den herkömmlichen, mehr quadratischen Querschnitten auf die Zentrifugalabscheidung des Staubes vorbereitet wird. Es wird so ein deutlich höherer Staubanteil bereits vor Eintritt des Gasstroms in den Schüttschichtfilter abgetrennt. Außerdem hat sich herausgestellt, daß ein derart in den Zentrifugalabscheider eingeleiteter Gasstrom wesentlich besser wieder zu vergleichmäßigen ist, weil er weniger ungewollte Wirbel und Strömungsstörungen aufweist.

Beide Maßnahmen führen also dazu, daß der für den Zentrifugalabscheider hinsichtlich Geschwindigkeit und Staubbeladung quer zur Strömungsrichtung starke Unterschiede aufweisende Gasstrom für die anschließende Staubabscheidung im Schüttschichtfilter wirksam geradegerichtet und vergleichmäßigt werden kann, so daß die einleitend geschilderten Nachteile weitgehend vermieden werden können und die gesamte Einrichtung wesentlich wirtschaftlicher betrieben werden kann.

Vorteilhafte Ausgestaltungen sind in den Unteransprüchen 2 bis 9 beschrieben, während sich die Unteransprüche 10 und 11 auf die Mehrfach-Anwendung solcher aus Zentrifugalabscheidern und Schüttschichtfiltern bestehende Einheiten beziehen.

Weitere Einzelheiten werden anhand der in den Figuren 1 bis 5 dargestellten Ausführungsbeispiele näher erläutert.

Figur 1 zeigt einen Vertikalschnitt durch eine stark vereinfacht dargestellte Ausführungsform des Erfindungsgedankens.

Figur 2 zeigt einen Horizontalschnitt der Ausführungsform nach Figur 1, Schnittebene A-A.

Figur 3 zeigt einen Teil-Vertikalschnitt durch eine stark vereinfacht dargestellte Ausführungsform des Erfindungsgedankens mit zwei übereinander angeordneten Schüttschichten.

Figur 4 zeigt eine Teil-Ansicht der Ausführungsform nach Figur 3 von oben.

Figur 5 zeigt einen Teil-Horizontalschnitt durch eine Vorrichtung mit einer Mehrzahl von Einrichtungen nach dem Erfindungsgedanken.

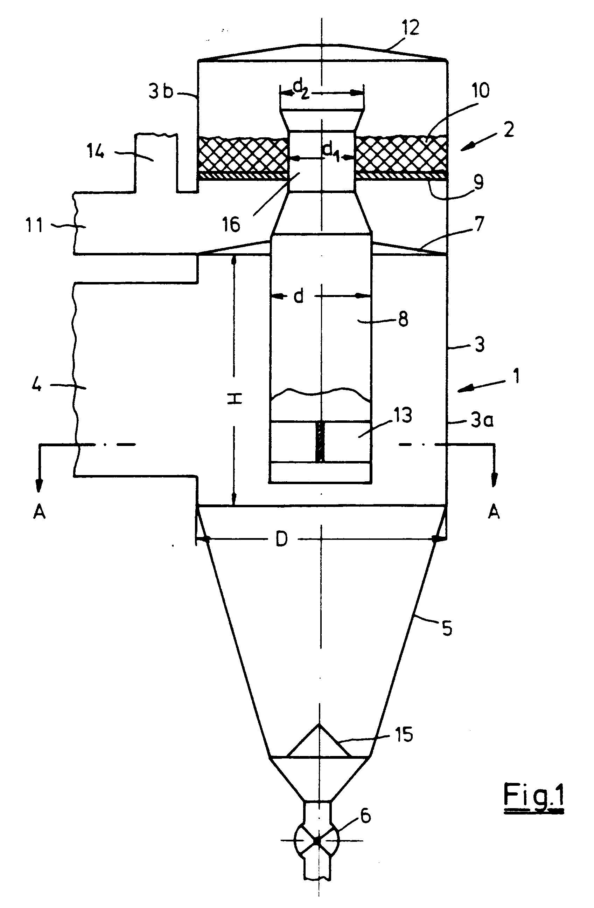

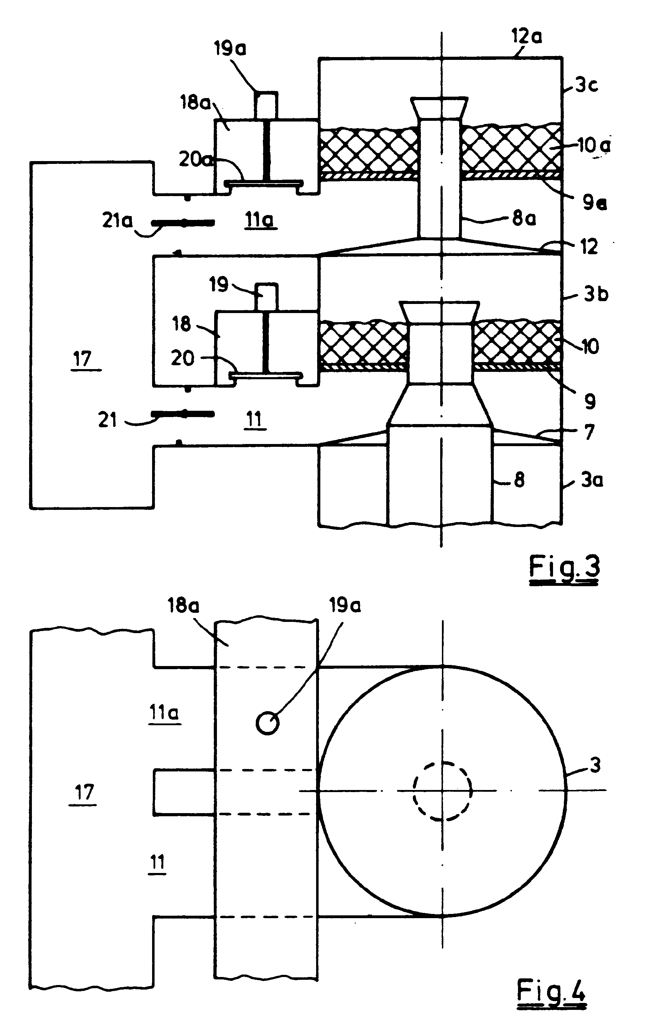

Bei der Ausführungsform gemäß Figur 1 sind ein Fliehkraftabscheider (1) und ein Schüttschichtfilter (2) als bauliche Einheit in einem gemeinsamen zylindrischen Gehäuse (3) unmittelbar übereinander angeordnet. Der zum Fliehkraftabscheider (1) gehörende Gehäuseteil (3a) weist eine Höhe H und einen tangentialen Gaseinlaßstutzen (4) auf. An das Gehäuseteil (3a) schließt sich nach unten ein Staubsammelbunker (5) mit Auslaß (6) an. Das zentral angeordnete Gasauslaßrohr (8) durchsetzt die Decke (7) des Fliehkraftabscheiders (1) und den Rost (9) sowie den Schüttraum (10) des Schüttschichtfilters (2). Das zum Schüttschichtfilter (2) gehörende Gehäuseteil (3b) ist oben durch einen Deckel (12) abgeschlossen und weist unterhalb des Rostes (9) einen Gasaustrittsstutzen (11) auf, in den noch ein Spülluftkanal (14) mündet, dessen Funktion in Verbindung mit Figur 3 näher erläutert wird. Erfindungsgemäß weist der Gaseinlaßstutzen (4) einen rechteckigen Querschnitt auf, dessen Höhe 60 bis 80 % und dessen Breite 20 bis 30 % der Höhe H des Gehäuseteils (3a) beträgt. Außerdem sind im Gasauslaßrohr (8) sich parallel zur Rohrachse erstreckende Gasleiteinrichtungen (13) vorgesehen.

Der Auslaß (6) für den Staub kann als Zellradschleuse ausgebildet sein. Die im unteren Teil des Staubsammelbunkers (5) vorgesehene kegelförmige Abdeckung (15) soll verhindern, daß bei Druckschwankungen im Gassystem Staub wieder aufgewirbelt und ausgetragen wird.

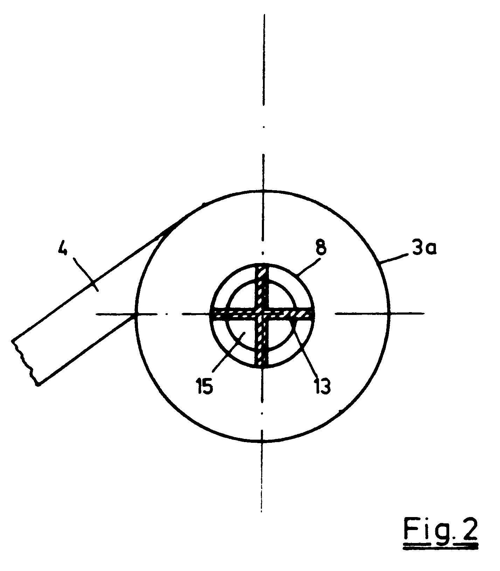

Wie aus Figur 2 in Verbindung mit Figur 1 ohne weiteres ersichtlich ist, ist der Gaseinlaßstutzen (4) erfindungsgemäß mit einer vergleichsweisen großen Höhe gegenüber der Breite ausgeführt. Damit wird eine sehr gute und gleichmäßige Verteilung des ankommenden Gasstroms über die gesamte Höhe H des Gehäuseteils (3a), verbunden mit einer sehr effektiven Staubabscheidung erreicht. Eine weitere erhebliche Verbesserung der Staubabscheidung wird dadurch erreicht, daß im Gasauslaßrohr (8) eine kreuzförmige Gasleiteinrichtung (13) vorgesehen ist. Mit dieser Einrichtung wird der im aufwärts gerichteten Gasstrom (verursacht durch die tangentiale Gaseinleitung) nahezu vollständig abgebaut, so daß eine im wesentlichen gleichmäßige Beaufschlagung des kreisringförmigen Schüttraums (10) im Schüttschichtfilter (2) realisiert werden kann. Zur weiteren Vergleichmäßigung weist das Gasauslaßrohr (8) im Bereich des Schüttgutraums (10) eine Verengung auf (vergl. Figur 1), wodurch der Gasstrom beschleunigt und weiter vergleichmäßigt wird.

Für manche Anwendungsfälle ist der kreisringförmige Schüttraum (10), der in einem Gehäuse mit einem vom Fliehkraftabscheider (1) vorgegebenen Durchmesser unterzubringen ist, zu klein. In solchen Fällen werden - wie in Figur 3 dargestellt - zwei Schüttschichten (10/10a) übereinander angeordnet. Über das Gasauslaßrohr (8a) wird ein Teil des gesamten Gasstroms (vorzugsweise etwa die Hälfte) in den oberen Gehäuseteil (3c) mit Deckel (12a) geleitet und durchströmt anschließend den Schüttraum (10a) und den Rost (9a). Dieser Teilgasstrom wird durch den Gasaustrittsstutzen (11a) in den Reingaskanal (17) geleitet. Der andere Teil des Gasstroms strömt aus dem Gehäuseteil (3b) mit Deckel (12) durch den Schüttraum (10) und den Rost (9) und gelangt über den Gasaustrittsstutzen (11) in den Reingaskanal (17).

In Figur 3 sind außerdem die Einrichtungen zur Rückspülung der Schütträume (10a/10) dargestellt. Es handelt sich dabei um Klappen (21/21a), mit denen der Gasströmungsweg abgesperrt werden kann, wenn - nach einer vorgegebenen Betriebszeit bzw. bei Erreichen eines vorgegebenen Druckabfalls - eine Rückspülung erforderlich wird. Nach Absperrung des Gasströmungsweges mittels der Klappen (21/21a) werden über Stellantriebe (19/19a) die Ventile (20/20a) geöffnet, so daß über die Kanäle (18/18a) Spülgas in den Schüttschichtfilter eingeführt werden kann, das die Roste (9/9a) bzw. die Schütträume (10/10a) entgegengesetzt zum normalen Gasdurchfluß durchströmt und dabei eine Reaktivierung des Schüttgutes für den Filtervorgang bewirkt.

Figur 4 zeigt eine Ansicht von oben auf die Einrichtung gemäß Figur 3.

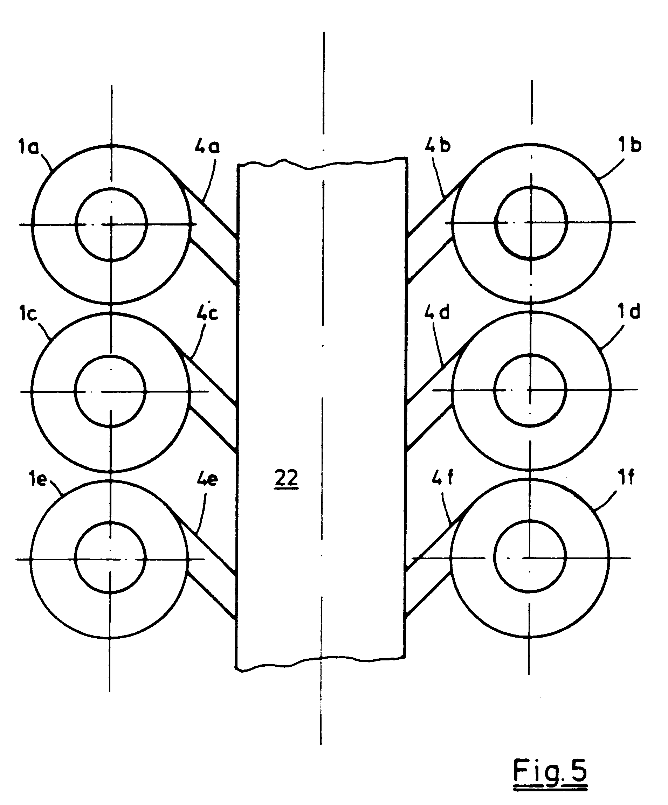

Aus Figur 5 ist schließlich ersichtlich, wie man eine Mehrzahl von Fliehkraftabscheidern (1a bis 1f) über eine entsprechende Anzahl von Gaseinlaßstutzen (4a bis 4f) mit einem gemeinsamen Kanal für die Zuleitung des Rohgases verbindet und zueinander anordnen kann. Dabei handelt es sich jeweils um Einrichtungen entsprechend der Erfindung, d.h. um Fliehkraftabscheider (1) mit je einem unmittelbar darüber angeordneten Schüttschichtfilter. Die Mehrfach-Anordnung wird aus zwei Gründen gewählt. Einerseits können Fliehkraftabscheider um effektiv zu sein, nicht mit einem beliebig großen Durchmesser ausgeführt werden, so daß sehr große Gasmengen aufgeteilt werden müssen. Zum anderen kann durch die Mehrfach-Anordnung gewährleistet werden, daß bei der erforderlichen Abreinigung bzw. Rückspülung eines Schüttschichtfilters mit der dazu erforderlichen Absperrung des Gasdurchgangs der für den Gasdurchgang verbleibende Querschnitt groß genug ist, um die Gasgeschwindigkeit nicht auf unzulässig hohe Werte ansteigen zu lassen. Bei der Auslegung geht man praktisch so vor, daß man eine oder mehrere derartiger Einrichtungen zusätzlich zu dem für die Reinigung einer Gasmenge insgesamt benötigten Strömungsquerschnitt vorsieht und andererseits das Abreinigungs- bzw. Rückspülprogramm so festlegt, daß jeweils nur der durch die zusätzliche Einrichtung (bzw. die zusätzlichen Einrichtungen) geschaffene Strömungsquerschnitt abgesperrt werden muß. Somit stehen trotz der notwendigen Rückspülphase stets 100 % des erforderlichen Strömungsquerschnitts zur Verfügung.

## Patentansprüche

1. Einrichtung zum Abscheiden von Feststoffpartikeln aus einem Gasstrom, bestehend aus einem Fliehkraftabscheider (1) und einem Schüttschichtfilter (2), die als bauliche Einheit in einem gemeinsamen zylindrischen Gehäuse (3) übereinander angeordnet sind, wobei der unten angeordnete Fliehkraftabscheider (1) ein Gehäuseteil (3a) mit einem Innendurchmesser D, mit einer Höhe H und einem tangentialen Gaseinlaßstutzen (4), einen sich an das Gehäuseteil (3a) unten anschließenden Staubsammelbunker (5) mit Auslaß (6) und ein die Decke (7) des Gehäuseteils (3a) durchsetzendes, zentral angeordnetes Gasauslaßrohr (8) aufweist und wobei das von oben nach unten durchströmte Schüttschichtfilter (2) über einem Rost (9) einen um das Gasauslaßrohr (8) angeordneten, kreisringförmigen Schüttraum (10), einen darüber liegenden Deckel (12) und im Gehäuseteil (3b) zwischen Rost (9) und Decke (7) einen Gasaustrittsstutzen (11) aufweist, dadurch gekennzeichnet, daß der Gaseinlaßstutzen (4) einen rechteckigen Querschnitt aufweist, dessen Höhe 60 bis 80 % und dessen Breite 20 bis 30 % der Höhe H beträgt, und daß im Gasauslaßrohr (8) sich parallel zur Rohrachse erstreckende Gasleiteinrichtungen (13) vorgesehen sind.

2. Einrichtung nach Anspruch 1 ist dadurch gekennzeichnet, daß der Innendurchmesser D des Gehäuseteils (3a) im wesentlichen gleich der Höhe H des Gehäuseteils (3a) ist.

3. Einrichtung nach Anspruch 1 oder 2 ist dadurch gekennzeichnet, daß der Durchmesser d des Gasauslaßrohres (8) 44 bis 48 % des Innendurchmessers D beträgt.

4. Einrichtung nach einem der Ansprüche 1 bis 3 ist dadurch gekennzeichnet, daß die Gasleiteinrichtung (13) aus zwei kreuzweise angeordneten Stegen (13a, 13b) besteht, deren Höhe 10 bis 20 % vom Innendurchmesser D beträgt.

5. Einrichtung nach Anspruch 4 ist dadurch gekennzeichnet, daß die Stege (13a, 13b) im Gasauslaßrohr (8) so angeordnet sind, daß ihre Unterkanten gegenüber der Einlaßebene des Gasauslaßrohres (8) um 5 bis 15 % vom Innendurchmesser D nach oben versetzt sind.

6. Einrichtung nach einem der Ansprüche 1 bis 5 ist dadurch gekennzeichnet, daß das Gasauslaßrohr (8) im Bereich des Schüttschichtraums (10) auf einer Länge entsprechend 20 bis 26 % von Innendurchmesser D auf einen Durchmesser d₁ entsprechend 35 bis 40 % vom Innendurchmesser D verengt ist.

7. Einrichtung nach Anspruch 6 ist dadurch gekennzeichnet, daß das Gasauslßrohr (8) an seinem oberen Ende einen Durchmesser d₂ entsprechend 40 bis 46 % vom Innendurchmesser D aufweist.

8. Einrichtung nach Anspruch 7 ist dadurch gekennzeichnet, daß die Übergänge von d auf d₁ auf d₂ konisch ausgebildet sind.

9. Einrichtung nach einem der Ansprüche 1 bis 8 , dadurch gekennzeichnet, daß der Deckel (12) ein weiteres zentral angeordnetes Gasauslaßrohr (8a) aufweist und im Gehäuseteil (3b) ein weiterer von oben nach unten durchströmter Schüttraum (10a) über einem weiteren Rost (9a) um das weitere zentral angeordnete Gasauslaßrohr (8a) angeordnet ist und zwischen dem weiteren Rost (9a) und einem weiteren Deckel (12a) ein weiterer Gasaustrittsstutzen (11a) angeordnet ist.

10. Vorrichtung zum Abscheiden von Feststoffpartikeln aus einem Gasstrom, dadurch gekennzeichnet, daß eine Mehrzahl von Einrichtungen gemäß den Ansprüchen 1 bis 9 zu einer baulichen Einheit mit je einem gemeinsamen Kanal für die Gaszu- und Gasableitung sowie einem gemeinsamen Kanal für die Zufuhr eines Spülgases verbunden sind.

11. Vorrichtung nach Anspruch 10, dadurch gekennzeichnet, daß in dem Kanal für die Gasableitung sowie im Spülgaskanal Absperrorgane zur wahlweisen Abschaltung und Rückspülung einzelner Einrichtungen gemäß den Ansprüchen 1 bis 9 vorgesehen sind.

## Claims

1. An apparatus for separating solid particles from a gas stream, consisting of a centrifugal separator (1) and a granular bed filter (2), which are arranged one over the other in a common cylindrical housing (3) to constitute a unit of construction, wherein the centrifugal separator (1) is arranged at the bottom and comprises a housing part (3a), having an inside diameter D with a height H and provided with a tangential gas inlet pipe (4), a dust-collecting bin (5), which adjoins the housing part (3a) at its bottom and is provided with an outlet (6), and a centrally disposed gas outlet pipe (8), which extends through the top wall (7) of the housing part (3a), and the granular bed filter (2) is flown through from top to bottom and comprises a granular bed space (10), which is disposed over a grate (9) and has the shape of a circular ring surrounding the gas outlet pipe (8), an above positioned cover (12) and a gas outlet pipe (11) arranged in the housing part (3b) between the grate (9) and the top wall (7) characterized in that the gas inlet pipe (4) is rectangular in cross-section and has a height amounting to 60 to 80% and a width amounting to 20 to 30% of the height H of the housing part (3a) and gas guiding means (13) are provided in the gas outlet pipe (8) and extend parallel to the axis of said pipe.

2. An apparatus according to claim 1, characterized in that the inside diameter D of the housing part (3a) is substantially as large as the height H of the housing part (3a).

3. An apparatus according to claim 1 or 2, characterized in that the diameter d of the gas outlet pipe (8) amounts to 44 to 48% of the inside diameter D.

4. An apparatus according to any of claims 1 to 3, characterized in that the gas-guiding means (13) consist of two crossing webs (13a, 13b), which have a height amounting to 10 to 20% of the inside diameter D.

5. An apparatus according to claim 4, characterized in that the webs (13a, 13b) are so arranged in the gas outlet pipe (8) that their bottom edges are upwardly offset from the entrance plane of the gas outlet pipe (8) by 5 to 15% of the inside diameter D.

6. An apparatus according to any of claims 1 to 5, characterized in that the gas outlet pipe (8) is constricted adjacent to the granular bed space (10) over a length of 20 to 26% of the inside diameter D to a diameter d₁ which amounts to 35 to 40% of the inside diameter D.

7. An apparatus according to claim 6, characterized in that the gas outlet pipe (8) has at its top end a diameter d₂ amounting to 40 to 46% of the inside diamter D.

8. An apparatus according to claim 7, characterized in that the transitions from d to d₁ and from d₁ to d₂ are conical.

9. An apparatus according to any of claims 1 to 8, characterized in that the cover (12) has an additional centrally arranged gas outlet pipe (8a), the housing part (3 b) contains around the additional centrally arranged gas outlet pipe (8a) an additional granular bed space (10a), which is disposed over an additional grate (9a), and an additional gas outlet pipe (11a) is disposed between the additional grate (9a) and an additional cover (12a).

10. A system for separating solid particles from a gas stream, characterized in that a plurality of apparatuses according to claims 1 to 9 are combined in a unit of construction and provided with a common gas supply duct, a common gas delivery duct and a common duct for supplying a purging gas.

11. An apparatus according to claim 10, characterized in that the gas delivery duct and the purging gas duct contain shut off valves for selectively disconnecting and back-purging individual apparatuses according to claims 1 to 9.

## Revendications

1. Dispositif de séparation de particules de matière solide d'un courant gazeux constitué d'un séparateur centrifuge (1) et d'une couche filtrante (2), qui, sous la forme d'une unité de construction, sont superposées dans une enveloppe (3) cylindrique commune, le séparateur centrifuge (1) disposé en bas comportant une partie formant enveloppe (3a) d'un diamètre intérieur D et d'une hauteur H et une tubulure (4) tangentielle d'entrée des gaz, une trémie (5) collectrice de poussière se raccordant par le bas à la partie formant enveloppe (3a) et ayant une sortie (6) et un conduit (8) de sortie des gaz traversant le sommet (7) de la partie formant enveloppe (3a) et disposé au centre, et la couche filtrante (2) traversée de haut en bas, comporte au-dessus d'une grille (9) un espace (10) annulaire pour la couche en vrac entourant le conduit (8) de sortie des gaz, un couvercle (12) se trouvant au-dessus et, dans la partie d'enveloppe (3b), entre la grille (9) et le sommet (7), une tubulure (11) de sortie des gaz, caractérisé en ce que la tubulure (4) d'entrée des gaz a une section transversale rectangulaire dont la hauteur représente de 60 à 80 % et dont la largeur représente de 20 à 30 % de la hauteur H, et en ce que, dans le conduit (8) de sortie des gaz, sont prévus des dispositifs (13) de canalisation des gaz s'étendant parallèlement à son axe.

2. Dispositif selon la revendication 1, caractérisé en ce que le diamètre intérieur D de la partie formant enveloppe (3a) est sensiblement égal à la hauteur H de la partie formant enveloppe (3a).

3. Dispositif suivant la revendication 1 ou 2, caractérisé en ce que le diamètre d du conduit (8) de sortie des gaz représente de 44 à 48 % du diamètre intérieur D.

4. Dispositif suivant l'une des revendications 1 à 3, caractérisé en ce que le dispositif (13) de canalisation des gaz est constitué de deux réglettes (13a,13b) disposées en croix, et dont la hauteur représente de 10 à 20 % du diamètre intérieur D.

5. Dispositif suivant la revendication 4, caractérisé en ce que les réglettes (13a,13b) sont disposées dans le conduit (8) de sortie des gaz de façon que leurs bords inférieurs soient décalés vers le haut par rapport au plan d'entrée du conduit (8) de sortie des gaz de 5 à 15 % du diamètre intérieur D.

6. Dispositif suivant l'une des revendications 1 à 5, caractérisé en ce que le conduit (8) de sortie des gaz est rétréci dans la partie de l'espace (10) réservé à la couche en vrac, sur une longueur représentant de 20 à 26 % du diamètre intérieur D, à un diamètre d₁ correspondant à 35 à 40 % du diamètre intérieur D.

7. Dispositif suivant la revendication 6, caractérisé en ce que le conduit (8) de sortie des gaz a, à son extrémité supérieure, un diamètre d₂ correspondant à 40 à 46 % du diamètre intérieur D.

8. Dispositif suivant la revendication 7, caractérisé en ce que les transitions de d à d₁ et de d₁ à d₂ sont coniques.

9. Dispositif suivant l'une des revendications 1 à 8, caractérisé en ce que le couvercle (12) comporte un autre conduit (8a) de sortie des gaz disposé au centre, et dans la partie formant enveloppe (3b), est prévu un autre espace (10a) pour la couche en vrac traversé de haut en bas au-dessus d'une autre grille (9a) et entourant l'autre conduit (8a) de sortie des gaz disposée au centre, et entre l'autre grille (9a) et un autre couvercle (12a), est disposée une autre tubulure (11a) de sortie des gaz.

10. Dispositif de séparation de particules de matière solide d'un courant gazeux, caractérisé en ce qu'un grand nombre de dispositifs suivant les revendications 1 à 9 sont reliés en une unité de construction, chacun ayant un canal commun pour l'entrée et la sortie des gaz, ainsi qu'un canal commun pour l'entrée d'un gaz de balayage.

11. Dispositif suivant la revendication 9, caractérisé en ce que dans le canal pour l'évacuation des gaz ainsi que dans le canal pour le gaz de balayage, sont prévus des organes d'arrêt permettant de mettre à volonté hors circuit et en balayage en retour les dispositifs individuels suivant les revendications 1 à 9.
